# FASCICULE DE BREVET EUROPEEN

(11) **EP 0 937 931 B1**
(45) Date de publication et mention de la délivrance du brevet: **01.10.2003**
(21) Numéro de dépôt: 98120925.7
(22) Date de dépôt: 04.11.1998
(51) Int. Cl.: F16L 5/04, H02G 3/22

(54) **Barrage des ouvertures pour le passage de tuyauteries et/ou câbles électriques à travers divisions navales**
Abdichtung für die Durchführungsöffnung von Rohrleitungen und/oder Elektrokabeln durch Schiffsschottwände
Sealing system for feedthrough openings for pipelines and/or electric cables through bulkheads on ships

(30) Priorité: 19.02.1998 IT GE980006
(43) Date de publication de la demande: 25.08.1999
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- EP-A- 0 333 982
- EP-A- 0 534 563
- DE-A- 3 446 503
- GB-A- 2 203 900
- IT-B- 1 262 854
- IT-B- 1 287 789
- US-A- 4 304 079
- US-A- 4 419 535

## Description

La présente invention concerne un système de barrage des ouvertures pour le passage de tuyauteries et/ou conduites et/ou câbles électriques à travers des divisions navales, telles que cloisons et ponts résistants au feu pendant 60 minutes, dénommées de classe A 60, pour les classes inférieures et sous charge hydrostatique, ainsi que le procédé pour sa réalisation.

Comme on le sait, il existe à bord des navires des divisions aptes à résister au feu et à la charge hydrostatique pendant un laps de temps préétabli.

Néanmoins, dans lesdites divisions, des ouvertures doivent être prévues pour le passage de tuyauteries et/ou conduites et/ou câbles électriques pour les installations technologiques de service; raison pour laquelle, dès la phase d'aménagement, on prépare les passages nécessaires.

Lesdits passages doivent être soigneusement calorifugés et/ou protégés pour ne pas infirmer la résistance au feu et à la charge hydrostatique prescrite en ce qui concerne la division, étant donné que les tuyauteries et/ou les conduites et/ou les câbles électriques sont d'excellents conducteurs de chaleur et, en particulier, les tuyauteries et/ou les conduites sont aussi propagatrices de flammes et constituent des passages aptes à consentir une éventuelle inondation.

Selon la technique connue, afin de permettre le passage de tuyauteries et/ou conduites, à travers des divisions navales appartenant à une classe donnée, on réalise un trou pour chaque tube et, si le tube est métallique, on soude sur la division, moyennant soudure continue, deux colliers métalliques spéciaux, un de chaque côté, en correspondance du trou, on insère ensuite le tube et on le soude des deux côtés aux deux colliers, moyennant soudure continue, en bloquant le tube. Si le tube n'est pas métallique et qu'il ne peut donc pas être soudé aux colliers, on utilise un dispositif appelé "trappe", constitué par un fourreau métallique que l'on soude sur l'un des côtés de la division et dont l'intérieur est doté d'une mousse intumescente avec un système à ressort qui bloque l'ouverture du tube.

Enfin, dans chacun de ces deux cas, on applique ensuite un revêtement avec un matériau isolant.

Selon la technique connue, les tubes qui, à bord des navires, sont fixés au moyen d'étriers séparés et s'étendent parallèles sous forme de faisceau, doivent, en correspondance des divisions, être éloignés en éventail afin de permettre, séparément pour chaque tube, la relative mise en place des deux colliers ou du fourreau ayant, bien entendu, un encombrement supérieur à celui du diamètre du tube correspondant. Le rayonnement des tubes comporte la nécessité de faire faire à chaque tube, des deux côtés de la division, courbe et contre-courbe, dans un premier temps pour les éloigner et ensuite pour les rapprocher.

Il en découle de sérieux inconvénients, tels qu'une augmentation considérable des coûts relatifs à la main-d'oeuvre, aux pièces spéciales nécessaires, au perçage multiple, à la mise en place des tuyauteries afin de réaliser le rayonnement des différents tubes, à la préparation et le soudage des colliers ou fourreaux, à l'isolation qui doit être appliquée par la suite, alors que, du point de vue technique, chaque courbe comporte des chutes de pression.

Selon la technique connue, pour le passage des câbles, des ouvertures sont réalisées dans les cloisons; elles sont généralement rectangulaires et leurs dimensions varient entre 100x80 et 500x140 mm.

Selon la technique connue, pour barrer les ouvertures sur le périmètre, on soude en continu un fourreau, en saillie d'environ 200 mm de part et d'autre. Un châssis en acier commun est mis en place à l'intérieur du fourreau et de petits blocs rigides sont placés dans ce châssis. Certains d'entre eux ont un trou dont les dimensions sont définies en fonction du diamètre du câble qui doit passer exactement à travers celui-ci. Le nombre de câbles passants est limité et leurs dimensions doivent être prévues au préalable.

Les directives SOLAS pour le sauvetage de l'homme en mer prescrivent que 32% seulement de la lumière libre de l'ouverture peuvent être occupés par des câbles et que la distance minimum entre un câble et l'autre doit être d'au moins 6 mm.

Les 68% restants non occupés par des câbles restent bouchés par des petits blocs rigides analogues mais entièrement fermés, sans trous passants. Une vis sans fin située au-dessus, à guillotine, à l'aide d'un élément transversal, comprime l'ensemble des petits blocs afin de les bloquer dans la position voulue et rendre le passage résistant au feu et étanche à l'eau.

Ce système connu présente toutefois quelques sérieux inconvénients.

L'un de ces inconvénients est le fait que le montage des petits blocs dans le châssis comporte un énorme travail, parce que les câbles ont parfois de grandes dimensions qui différent de l'un à l'autre.

Un autre inconvénient de ce système connu est qu'il constitue une grande contrainte même lors de la phase de définition du projet étant donné qu'il y a, à bord, des kilomètres de câbles et que l'on doit prévoir de façon exacte quelques années auparavant quels sont les câbles qui devront passer à travers cette ouverture.

Il est pourtant vrai que ce système permet une certaine variation entre éléments passants de dimensions analogues, au moment de l'installation, mais une adaptation successive pour des modifications substantielles des dimensions et du nombre de câbles est impossible.

Toutefois, cette solution est encore adoptée dans la zone sous charge hydrostatique, c'est-à-dire sous la ligne de flottaison du navire où il est nécessaire d'avoir une résistance valable, non seulement au feu, mais aussi à une éventuelle pression de l'eau, en cas d'inondation.

Lorsque l'ouverture se trouve par contre dans une division située dans la zone au-dessus de la charge hydrostatique, la solution connue, actuellement adoptée, est la suivante.

On soude autour de l'ouverture un collier sur le côté supérieur duquel sont disposés deux tronçons de tube, de façon telle que l'air sorte de l'un d'entre eux et que l'autre soit relié, au moyen d'une pompe, à un réservoir contenant une matière à l'état liquide qui est pompée à l'intérieur du collier. Pour empêcher la sortie latérale du liquide, on dispose des deux côtés de petites éponges comprimées spécialement prévues à cet effet, qui sont placées dans les espaces vides entre les câbles et entre les câbles et le collier, ensuite on les asperge d'eau afin que, lorsqu'elles se dilatent, elles assurent une certaine étanchéité. Ensuite, on pompe le liquide qui se répand dans les méandres entre un câble et l'autre et dans les zones vides. Après un certain nombre d'heures, ce liquide devient solide et le passage reste résistant au feu.

Le principal inconvénient de ce système est qu'il comporte un encombrement de 20 cm de chacun des deux côtés de la division qui, remplis de matériaux liquides, constituent un poids considérable, alors qu'à bord des navires il est toujours nécessaire de réduire au maximum les encombrements et les poids.

Un autre inconvénient est que, du point de vue de l'exécution, cette mise en oeuvre est complexe et laborieuse car, pendant la préparation à terre, il faut prévoir l'ouverture dans le bloc, installer le collier, le fixer avec des points de soudure et le souder, et il est ensuite difficile de réussir à bien insérer les petites éponges dans chaque interstice vu que les câbles sont très nombreux, de différents diamètres et, en effet, lors de la phase du pompage, des fuites surviennent souvent.

Une réalisation particulière pour le barrage - des ouvertures pour le passage de câbles électriques à travers des divisions est celle illustrée dans le brevet US A 4419535, qui décrit un boîtier 13 contenant une pluralité de parois qui subdivisent le boîtier en compartiments qui s'étendent entre les deux extrémités ouvertes. Chaque compartiment est dimensionné de façon à pouvoir recevoir un nombre de câbles prédéterminé. Sur les parois de chaque compartiment est disposé un revêtement isolant en matériau intumescent, apte à se dilater et à sceller chaque compartiment contre le feu.

Un autre exemple est décrit dans le brevet GB A 2203900, qui consiste en plaques 14, 23, 24 fixées sur l'un des deux côtés ou sur les deux côtés d'une paroi qui doit résister au feu pour en couvrir une ouverture. Lesdites plaques sont attachées aux éléments tubulaires 17, 25, 26, aptes à contenir exactement des câbles et le matériau d'étanchéité. Les câbles peuvent être supportés par un plateau 12.

Ces deux brevets présentent les inconvénients des autres exemples cités ci-dessus comme technique connue, c'est-à-dire la prédétermination nécessaire des dimensions du boîtier 13 ou des plaques 14, 23, 24 avec les éléments tubulaires 17, 25, 26, à travers lesquels le passage des câbles ou des tuyaux est prévu.

Cependant, jusqu'au moment de leur mise en oeuvre, pour les tuyauteries et/ou les conduites et, en particulier pour les câbles électriques, il existe la possibilité de devoir opérer des changements, raison pour laquelle un sérieux inconvénient des systèmes de protection connus pour tamponner les passages est qu'ils ne sont pas suffisamment flexibles afin de consentir, pendant les travaux, d'éventuelles variantes imprévues.

Et pour terminer, un ultérieur inconvénient de la technique connue est qu'il n'est absolument pas possible d'effectuer la moindre modification lors d'une phase successive à celle du montage des tuyauteries et/ou des conduites et/ou des câbles électriques.

Le but de la présente invention est de réaliser un barrage des ouvertures pour le passage de tuyauteries et/ou conduites et/ou câbles électriques à travers des divisions navales jusqu'à la classe A60 et sous charge hydrostatique, apte à résoudre tous les inconvénients mentionnés ci-dessus, de façon simple et économique.

Dans ce but, on a réalisé le système de barrage selon la présente invention, qui est analogue à celui décrit dans le brevet italien N° 1262854 et dans la demande de brevet italien N° GE 96 A 000050, au nom du même titulaire, dans lesquels le matériau utilisé pour la fermeture hermétique du tamponnement était caractérisé par le fait qu'il est intumescent.

Le matériau intumescent susdit présente toutefois deux limitations.

La première a été constatée lors de la phase d'expérimentation en ce qui concerne un tamponnement de tubes en faisceau. En effet, lors de la phase conclusive de l'essai, pour une maquette de cloison A 60, pendant la dernière phase de déformation de la maquette, à cause d'une déformation différente entre les tubes et la partie métallique, la rigidité du système s'est montrée telle que le matériau intumescent de tamponnement continuait à adhérer aux tubes et il s'est détaché de la partie métallique de la maquette, sous l'effet de succion qui s'est créé à la suite de la déformation.

La deuxième limitation est une conséquence des récentes restrictions plus sévères, en vigueur à compter du mois de juillet 1998, imposées par les normes internationales IMO qui prescrivent de nouveaux critères à respecter pour les matériaux à utiliser à bord des navires, avec une particulière attention à l'opacité et à la toxicité des fumées qu'ils produisent en cas d'incendie.

Selon la présente invention, pour remédier aux limitations susdites, au lieu du matériau intumescent, un matériau scellant incombustible et élastique a été utilisé. En particulier, le matériau connu sous la dénomination commerciale de NAVYCROSS s'est révélé spécialement approprié; il s'agit d'un produit à un seul composant, à base de fibres.

Selon la présente invention, sur le périmètre de l'ouverture à travers laquelle passent les tuyauteries et/ou les conduites et/ou les câbles électriques, on insère des agrafes d'ancrage, on tamponne les lumières restées libres au moyen d'éléments modulaires de remplissage qui, dans le cas des câbles, conservent également la distance réciproque prescrite, ensuite on bloque hermétiquement le tamponnement avec un scellant incombustible et élastique convenable en recouvrant éventuellement aussi les tuyauteries et/ou les conduites et/ou les câbles électriques de grandes dimensions sur une longueur d'environ 100 mm.

Avec le barrage selon la présente invention, on élimine tous les inconvénients cités ci-dessus pour les systèmes connus et l'on obtient par contre les avantages d'une mise en oeuvre aisée, d'une grande épargne, légèreté, encombrement réduit avec une parfaite étanchéité du barrage en conditions accidentelles de feu pour une cloison jusqu'à la classe A 60 et sous charge hydrostatique.

Avec la présente invention, un seul trou est suffisant dans les divisions navales, il n'y a plus de rayonnement des tubes mais les tuyauteries et/ou les conduites et/ou les câbles électriques peuvent les traverser en continuant leur parcours, toujours droits et parallèles, sans chutes de pression dans le cas des tubes, et sans encombrement supérieur en correspondance de la traversée des diviseurs. Un avantage très important de la présente invention, ne pouvant jamais être obtenu avec la technique connue, est représenté par le fait que il est en outre possible d'effectuer des modifications en tout moment, même pendant des périodes suivant celle du montage.

Selon la présente invention, les agrafes d'ancrage qui sont insérées sur le périmètre de l'ouverture, sont constituées par une bande repliée en "T" de façon élastique en correspondance de la tige du "T", les ailes du "T" s'éloignant dans une direction généralement perpendiculaire à chacune des faces de la paroi traversée, de façon à pouvoir être appliquées en chevauchant le bord de l'ouverture avec une certaine pression pour en garantir la stabilité.

On élimine ainsi la mise en place des deux colliers et/ou du fourreau avec les relatives soudures que l'on devait réaliser avec les systèmes connus.

On peut obtenir les agrafes d'ancrage à partir d'une bande métallique percée, par exemple en acier galvanisé. Les éléments modulaires de remplissage pour tamponner les lumières sont constitués par des bandes flexibles ayant une largeur préétablie, de façon à maintenir constante l'épaisseur du barrage fini pour garantir la résistance requise. L'épaisseur constante des bandes garantit et maintient, dans le cas des câbles, les distances réciproques minimum prescrites.

Les bandes des éléments modulaires de remplissage sont réalisées en matériau isolant à propagation limitée de la flamme ou auto-extincteur qui doit avoir des caractéristiques de tamponnement comme, par exemple, la mousse expansée de polyuréthane auto-extincteur, la laine de roche, ou des matières similaires.

La flexibilité des éléments modulaires de remplissage et leur dimension standardisée permettent d'effectuer ledit tamponnement proprement et rapidement, en réalisant en même temps un support convenablement rigide pour l'application successive du matériau scellant.

Le matériau scellant, incombustible et élastique, s'applique sur le tamponnement et sur les tuyauteries, sur les conduites et sur les câbles électriques de grandes dimensions, les revêtant sur une longueur d'environ 100 mm après le tamponnement.

Le procédé pour la réalisation du barrage selon la présente invention est le suivant.

Après avoir inséré les agrafes d'ancrage sur le périmètre de l'ouverture, on réalise le tamponnement.

Dans le cas des tuyauteries et/ou des conduites on remplit puis on presse la lumière libre des passages, en partant de la zone du périmètre de ces derniers, au moyen des éléments modulaires de remplissage. On complète l'opération en remplissant et en pressant ensuite les zones centrales restées libres entre les tuyauteries et/ou les conduites.

Dans le cas des câbles électriques, on enroule par contre les câbles avec les éléments modulaires de remplissage, en commençant par les câbles positionnés au centre de l'ouverture, jusqu'à atteindre ceux qui sont plus périphériques. On complète donc l'opération en remplissant et pressant les zones du périmètre restées libres entre les câbles et le bord de l'ouverture.

Après avoir entièrement tamponné l'ouverture, on revêt le tamponnement à l'aide du matériau scellant incombustible et élastique convenable qui peut être constitué, par exemple, par un produit à un seul composant à base de fibres; on peut aisément l'appliquer au moyen d'une spatule ou par extrusion.

On commence à appliquer le matériau scellant autour des tuyauteries et/ou des conduites et/ou des câbles électriques centraux, puis progressivement vers les zones périphériques en revêtant aussi les agrafes d'ancrage, jusqu'à ce que l'on arrive sur la division. On revêt de matériau scellant sur une longueur de 100 mm. également les tuyauteries et/ou les conduites et/ou les câbles électriques de grandes dimensions, par exemple ceux ayant un diamètre égal ou supérieur à 42 mm, éventuellement des deux côtés du barrage.

L'épaisseur de la couche de matériau scellant est déterminée par la largeur des ailes du "T" des agrafes d'ancrage et, en effet, le tamponnement constitué par les éléments modulaires, plus le matériau scellant, doivent correspondre à la largeur des ailes du "T" des agrafes d'ancrage.

Il suffit que le revêtement des tuyauteries et/ou des conduites et/ou des câbles électriques de grandes dimensions au moyen du matériau scellant ait une épaisseur de quelques millimètres.

Dans le cas d'une modification successive opportune des tuyauteries et/ou des conduites et/ou des câbles électriques qui traversent l'ouverture, on perce le matériau scellant qui, avec le temps, se sera solidifié et, dans le trou ainsi obtenu, on insère les tuyauteries et/ou conduites et/ou câbles électriques nouveaux, puis on remet le tout en place en lissant le matériau scellant pour boucher les lumières encore libres.

Avec la réalisation du barrage, selon la présente invention, il est même possible de laisser libre un trou supplémentaire, afin de le tenir à disposition pour d'éventuels passages imprévus par la suite, mais que l'on pourra fermer en cas de non utilisation.

Tous les avantages susdits et d'autres encore, apparaîtront évidents dans la description des figures, jointes uniquement à titre d'illustration et non pas limitatif dans lesquelles:
la fig. 1 illustre une vue frontale, partiellement sectionnée, selon la ligne brisée I-I de figure 2, d'un barrage selon la présente invention pour le passage de tuyauteries et/ou conduites.
La fig. 2 représente une section partielle selon le plan II-II de figure 1, dans laquelle a été ôté le matériau de tamponnement situé devant les tuyauteries et/ou conduites.
La fig. 3 illustre une vue frontale, partiellement sectionnée, d'un barrage, selon la présente invention, pour le passage de câbles électriques.
La fig. 4 représente une section dans laquelle le matériau de tamponnement situé devant les câbles a été ôté.
La fig. 5 est une vue en perspective des agrafes d'ancrage.

Dans les différentes figures, les éléments analogues ont été indiqués avec les mêmes symboles numériques.

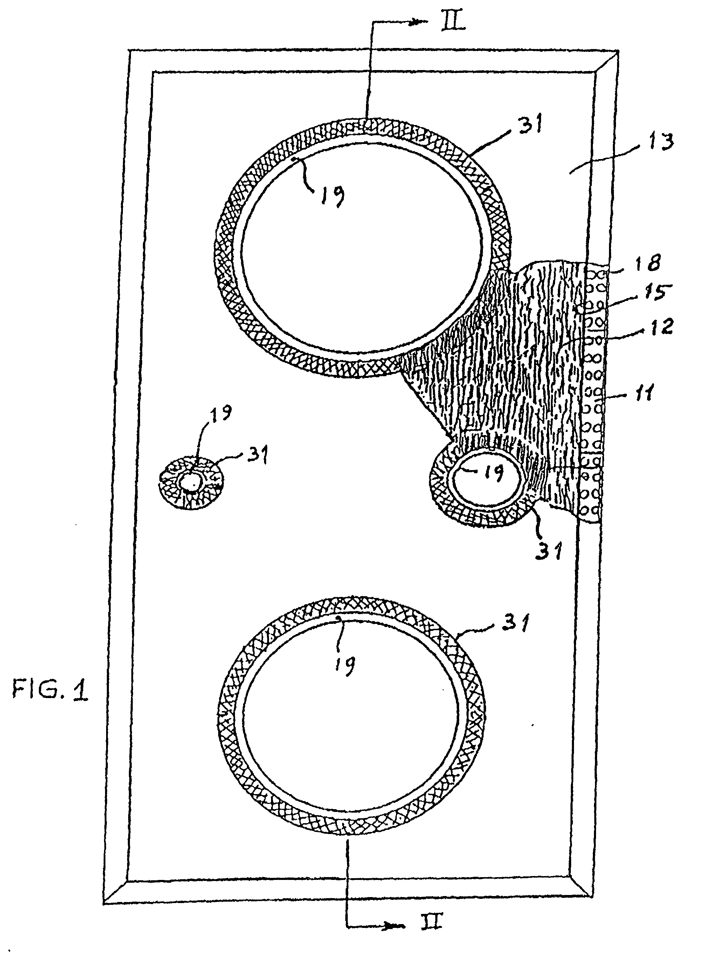

Comme il résulte des figures 1, 2, 3 et 4, les agrafes d'ancrage 11 ont été insérées sur le périmètre de l'ouverture 15 pratiquée dans la division 14.

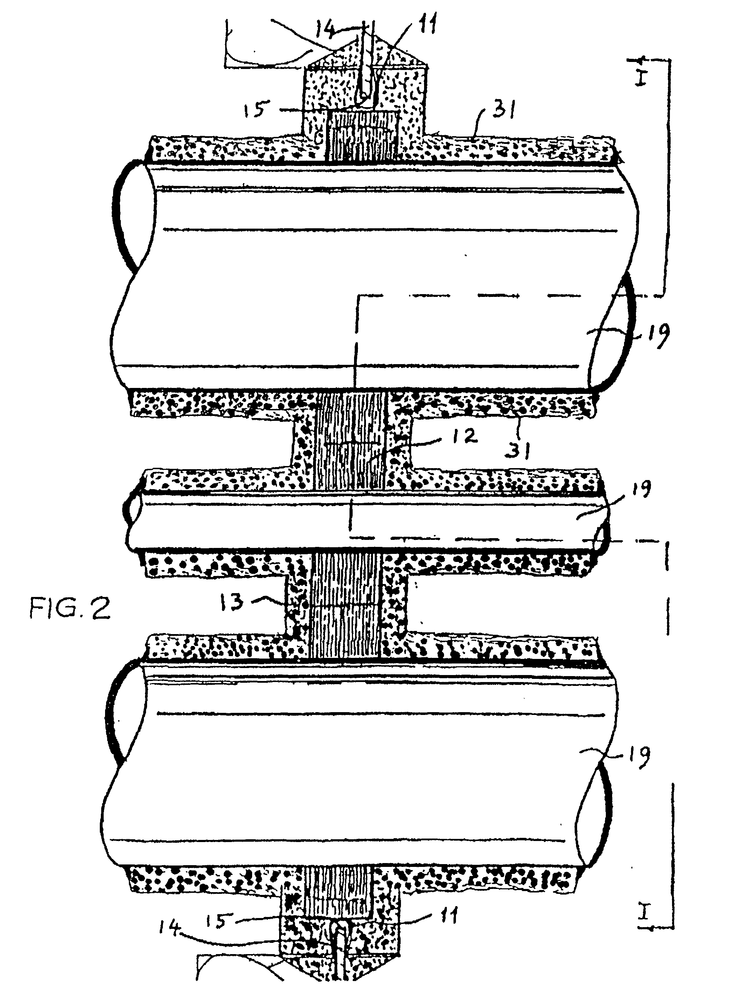

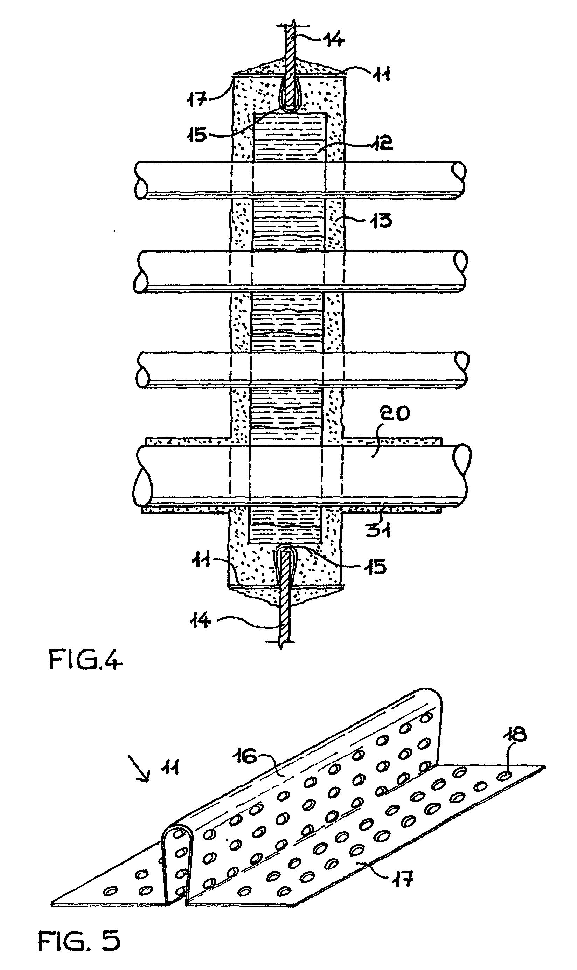

Les agrafes d'ancrage 11, dont un exemple est illustré dans la figure 5, sont constituées par une bande percée repliée en "T", de façon élastique en correspondance de la tige 16 du "T", pour être insérées à ressort sur le bord des divisions 14, comme illustré dans les figures 2 et 4.

Dans le cas de cet exemple, les agrafes d'ancrage 11 ont été obtenues à partir d'une tôle en acier galvanisé de 0,9 mm.

Les ailes 17 du "T" ont une largeur préétablie qui commandera ensuite l'épaisseur d'ensemble du barrage et, par différence, celle du matériau scellant incombustible et élastique 13. Dans l'exemple de l'essai, pour une division A 60, les dimensions suivantes ont été adoptées: la largeur de chacune des deux ailes 17 est de 30 mm, la hauteur de la tige du "T" est de 20 mm, la longueur de chaque agrafe est de 80 mm ou ses multiples.

Les trous 18 ont pour but d'obtenir une plus grande pénétration du matériau scellant 13.

Comme illustré dans la figure 1, le tamponnement de l'ouverture 15 a été effectué avec les éléments modulaires de remplissage 12, remplissant et pressant la lumière ou surface libre des passages entre les tuyauteries et/ou les conduites 19.

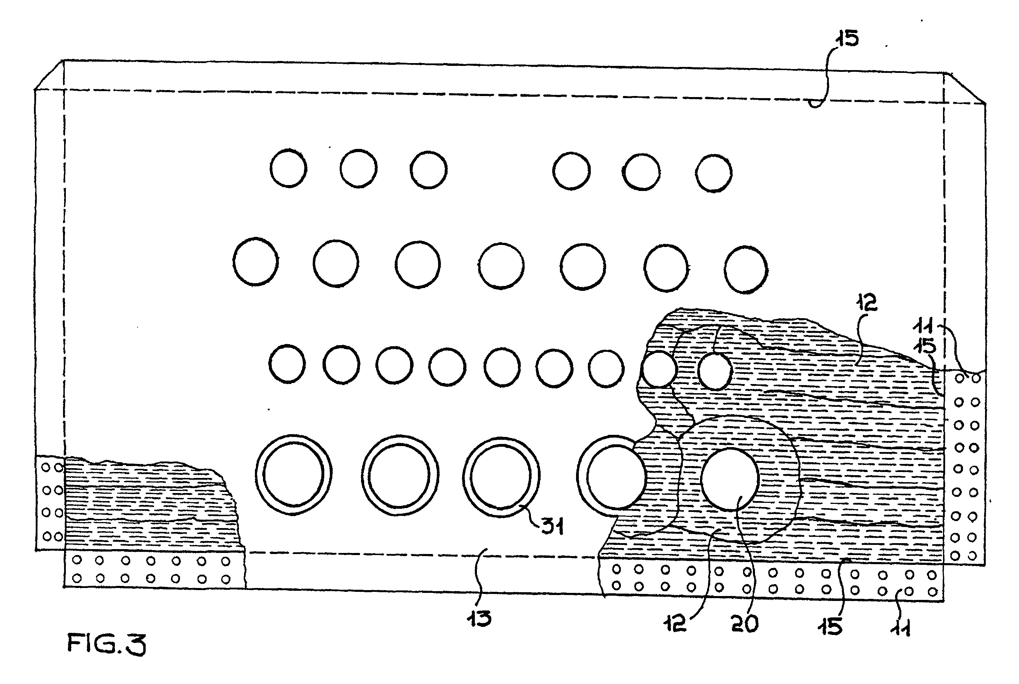

Dans le cas des câbles, comme l'indique la figure 3, dans laquelle le matériau scellant a été ôté, autour des câbles 20 ont été enroulés les éléments modulaires de remplissage 12, coupés ou rompus à la main, selon les longueurs opportunes. Après avoir enroulé tous les câbles, en commençant par ceux qui se trouvent au centre, l'opération a été complétée, en remplissant et pressant les zones du périmètre restées libres entre les câbles 20 et les bords de l'ouverture 15 au moyen des éléments modulaires qui, même dans cette position, ont été indiqués avec le numéro 12.

Dans le cas spécifique de l'exemple reporté, pour les éléments modulaires de remplissage 12, on a utilisé un matériau constitué par des bandes de polyuréthane auto-extincteur, connu sous le nom commercial de "MODULES DE REMPLISSAGE FR", dimensionné en bandes ayant une épaisseur de 30 mm, une largeur de 40 mm, une longueur d'un mètre. L'épaisseur de 30 mm. est telle que, étant donné la densité du matériau, lorsque ce dernier est installé, il ne peut pas être comprimé à une épaisseur inférieure à 6 mm pour se conformer, dans le cas des câbles, aux directives SOLAS, relatives à la distance minimum entre un câble et l'autre.

La largeur constante de 40 mm garantit l'épaisseur du tamponnement. Aussi bien pour les câbles 20 que pour les tuyauteries et/ou conduites 19, comme illustré dans les figures 2 et 4, sur les deux côtés des éléments modulaires de remplissage 12, l'épaisseur du matériau scellant 13 appliqué est en mesure de revêtir les ailes 17 des agrafes d'ancrage 11.

Dans le cas de l'exemple spécifique, un matériau scellant incombustible et élastique 13, connu sous le nom commercial "NAVYCROSS", a été utilisé.

L'épaisseur de la couche de matériau scellant 13, qui réalise la fermeture totale du tamponnement et confère une résistance mécanique appropriée, est de 10 mm de chaque côté, raison pour laquelle, additionnée à la largeur de 40 mm des éléments 12, l'épaisseur totale du barrage est de 60 mm. Ce fait donne une garantie en ce qui concerne le respect des directives, étant donné que les certifications du Registre Naval sont en fonction des épaisseurs du matériau employé et du respect du système de montage relatif.

En utilisant le matériau scellant 13, on revêt également les agrafes 11, jusqu'à arriver sur la division 14 et au-delà, comme illustré dans les figures 2 et 4.

En outre, comme on peut l'observer plus clairement dans les exemples des figures 2 et 4, les tuyauteries, les conduites et le câble de grandes dimensions, ayant diamètre égal ou supérieur à 42 mm, ont été également revêtus en utilisant le même matériau scellant incombustible et élastique 13 qui, ici, est indiqué par le numéro 31, avec une épaisseur de 3 mm environ sur une longueur d'environ 100 mm, outre à l'épaisseur du barrage.

Ce qui est indiqué ci-dessus a été prévu pour se conformer aux directives SOLAS en ce qui concerne les températures maximum d'essai acceptées et qu'il ne faut donc pas dépasser pendant l'essai au feu, du côté de la cloison non intéressée par le feu en question.

Avec la réalisation, selon l'exemple illustré, un barrage qui rétablit la continuité caractéristique des cloisons A 60 et sous charge hydrostatique a été obtenu.

## Revendications

1. Barrage des ouvertures pour le passage de tuyauteries et/ou conduites et/ou câbles électriques à travers divisions navales jusqu'à la classe A 60 et sous charge hydrostatique, **caractérisé par le fait qu'**il est réalisé au moyen de l'insertion d'agrafes d'ancrage (11) chevauchant le bord de l'ouverture (15), constituées par une bande en "T", repliées de facon élastique en correspondance de la tige (16) du "T", la dite tige du "T" chevauchant le bord de l'ouverture (15) les ailes du "T" s'éloignant dans une direction généralement perpendiculaire à chacune des faces de la paroi traversée, et **par le fait que** le tamponnement des surfaces restées libres est réalisé au moyen d'éléments modulaires de remplissage (12), qui sont constitués par des bandes flexibles en produit isolant à propagation de flamme limitée ou en matériau auto-extincteur, et **par le fait que** le revêtement du tamponnement est réalisé avec un matériau scellant (13, 31) incombustible et élastique appliqué à l'aide d'une spatule ou par extrusion.

2. Barrage des ouvertures pour le passage de tuyauteries et/ou conduites et/ou câbles électriques selon la revendication 1, **caractérisé par le fait que** le matériau scellant (31) incombustible et élastique revêt, à partir de l'un des deux côtés ou bien des deux côtés du barrage, les tuyauteries et/ou les conduites (19) et/ou les câbles électriques (20) de grandes dimensions, par exemple avec diamètre égal ou supérieur à 42 mm., sur une longueur d'environ 100 mm., avec une épaisseur de 3 mm. environ.

3. Barrage des ouvertures pour le passage de tuyauteries et/ou conduites et/ou câbles électriques selon la revendication 1, **caractérisé par le fait que** les agrafes d'ancrage (11) ont la largeur des ailes (17) du "T" qui garantisse la constance de l'épaisseur du barrage fini.

4. Barrage des ouvertures pour le passage de tuyauteries et/ou conduites et/ou câbles électriques selon la revendication 1, **caractérisé par le fait que** les agrafes d'ancrage (11) sont obtenues à partir d'une bande métallique percée, par exemple en acier galvanisé.

5. Barrage des ouvertures pour le passage de tuyauteries et/ou conduites et/ou câbles électriques selon la revendication 1, **caractérisé par le fait que** les agrafes d'ancrage (11) ont une épaisseur de 0,9 mm., une hauteur de 20 mm., une largeur des deux ailes (17) du "T" de 60 mm., une longueur de 80 mm. ou multiples.

6. Barrage des ouvertures pour le passage de tuyauteries et/ou conduites et/ou câbles électriques selon la revendication 1, **caractérisé par le fait que** l'on utilise comme matériau scellant (13) incombustible et élastique un produit connu sous le nom commercial "NAVYCROSS" ou un produit similaire.

7. Barrage des ouvertures pour le passage de tuyauteries et/ou conduites et/ou câbles électriques selon la revendication 1, **caractérisé par le fait que** les éléments modulaires de remplissage (12) sont constitués par des bandes de mousse expansée en polyuréthane auto-extincteur, en laine de roche ou similaires, ayant une largeur prédéterminée.

8. Barrage des ouvertures pour le passage de tuyauteries et/ou conduites et/ou câbles électriques selon la revendication 1, **caractérisé par le fait que** les éléments modulaires de remplissage (12) sont constitués par un matériau connu sous le nom commercial de "Modules de remplissage FR".

9. Barrage des ouvertures pour le passage de tuyauteries et/ou conduites et/ou câbles électriques selon la revendication 1, **caractérisé par le fait que** le matériau scellant (13) incombustible et élastique est constitué par un produit à un seul composant, à base de fibres.

10. Barrage des ouvertures pour le passage de tuyauteries et/ou conduites et/ou câbles électriques selon la revendication 1, **caractérisé par le fait que** les éléments modulaires de remplissage (12) sont dimensionnés avec une épaisseur de 30 mm., une largeur de 40 mm., une longueur d'un mètre et que l'épaisseur de la couche de matériau scellant (13) incombustible et élastique est de 10 mm. des deux côtés, raison pour laquelle l'épaisseur totale du barrage est de 60 mm, correspondant à la largeur des ailes (17) des agrafes d'ancrage (11).

11. Procédé pour réaliser le barrage des ouvertures pour le passage de tuyauteries et/ou conduites à travers divisions navales jusqu'à la classe A 60 et sous charge hydrostatique selon la revendication 1, **caractérisé par le fait que** les agrafes d'ancrage (11) obtenues à partir d'une bande métallique percée pliée en "T", s'insèrent sur le périmètre de l'ouverture (15), la tige du "T" chevauchant le bord de l'ouverture (15), les ailes du "T" s'éloignant dans une direction généralement perpendiculaire à chacune des faces de la paroi traversée, qu'on réalisè le tamponnement pour les tuyauteries et/ou les conduites (19) en remplissant et pressant la surface libre des passages, en partant de la zone du périmètre de. ces dernières, au moyen d'éléments modulaires de remplissage (12), constitués par des bandes flexibles en produit isolant à propagation de flamme limitée ou en matériau auto-extincteur, qu'on complète l'opération en remplissant et pressant les zones centrales restées libres entre les tuyauteries et/ou les conduites (19) au moyen' d'éléments modulaires de remplissage (12), qu'après avoir tamponné totalement l'ouverture (15) on la revêt à l'aide d'un matériau scellant (13) incombustible et élastique, appliqué à l'aide d'une spatule ou par extrusion, en commençant l'application autour des tuyauteries et/ou conduites centrales (19) puis progressivement vers les zones périphériques, en revêtant également les agrafes d'ancrage (11), jusqu'à arriver sur la division, à l'aide du matériau scellant (13) incombustible et élastique, on revêt avec du matériau scellant (31) incombustible et élastique, les tuyauteries et/ou conduites (19) de grandes dimensions, ayant par exemple un diamètre égal ou supérieur à 42 mm., sur une longueur d'environ 100 mm. et avec une épaisseur d'environ 3 mm., sur l'un des deux côtés ou sur les deux côtés du barrage.

12. Procédé pour réaliser le barrage des ouvertures pour le passage de câbles électriques (20) à travers divisions navales jusqu'à la classe A 60 et sous charge hydrostatique selon la revendication 1, **caractérisé par le fait que** les agrafes d'ancrage (11) obtenues à partir d'une bande métallique percée pliée en "T", s'insèrent sur le périmètre de l'ouverture (15), la tige du "T" chevauchant le bord de l'ouverture (15), les ailes du "T" s'éloignant dans une direction généralement perpendiculaire à chacune des faces de la paroi traversée, qu'on réalise le tamponnement en enroulant les câbles (20) au moyen des éléments modulaires de remplissage (12), constitués par des bandes flexibles en produit isolant à propagation de flamme limitée ou en matériau auto-extincteur, en partant des câbles placés au centre de l'ouverture (15) jusqu'à arriver à ceux qui sont plus périphériques, qu'on complète l'opération en remplissant et pressant les zones du périmètre restées libres entre les câbles (20) et les bords de l'ouverture (15), au moyen d'éléments modulaires de remplissage (12), qu'après avoir tamponné totalement l'ouverture (15) on la revêt à l'aide d'un matériau scellant (13) incombustible et élastique, appliqué à l'aide d'une spatule ou par extrusion, en commençant l'application autour des câbles électriques centraux (20) puis progressivement vers les zones périphériques, en revêtant également les agrafes d'ancrage (11), jusqu'à arriver sur la division, à l'aide du matériau scellant (13) incombustible et élastique, on revêt les câbles électriques (20) de grandes dimensions, ayant par exemple un diamètre égal ou supérieur à 42 mm., sur une longueur d'environ 100 mm. et avec une épaisseur d'environ 3 mm., sur l'un des deux côtés ou sur les deux côtés du barrage.

## Patentansprüche

1. Sperre der Öffnungen für den Durchgang von Röhrchen und/oder Rohrleitungen und/oder Kabel durch Schiffstrennwände bis zur Klasse A 60, die unter hydrostatischem Druck stehen, **dadurch gekennzeichnet, daß** diese Sperre durch das Einfügen von Verankerungsklammern (11) erfolgt, die rittlings auf dem Rand der Öffnung (15) angeordnet sind und aus einem Streifen in "T" Form bestehen, der elastisch in Verbindung mit der Stange (16) des "T" zurückgefaltet ist, diese Stange des "T" befindet sich rittlings auf dem Rand der Öffnung (15), die Flügel des "T" entfernen sich in einer meist senkrechten Richtung zu jeder der beiden Seiten der durchquerten Trennwand, und durch die Tatsache **gekennzeichnet,** daß die Abdichtung der frei gebliebenen Oberflächen durch ausfüllende Modulelemente (12) erfolgt, die aus flexiblen Streifen aus isolierendem, die Ausbreitung der Flammen begrenzendem oder selbstlöschendem Material bestehen, und durch die Tatsache **gekennzeichnet**, daß die Verkleidung der Abdichtung durch ein versiegelndes (13, 31), nicht brennbares und elastisches Material verwirklicht wird, das mit Hilfe eines Spatels oder durch Fließpressen aufgetragen wird.

2. Sperre der Öffnungen für den Durchgang von Röhrchen und/oder Rohrleitungen und/oder Kabel durch Schiffstrennwände nach Anspruch 1, **dadurch gekennzeichnet, daß** das versiegelnde (31) nicht brennbare und elastische Material ausgehend von einer der beiden Seiten oder von beiden Seiten der Sperre die Röhrchen und /oder die Rohrleitungen (19) und/ oder die Kabel (20) von großem Ausmaß, wie zum Beispiel mit einem Durchmesser gleich oder mehr als 42 mm, für eine Länge von ungefähr 100 mm und mit einer Dicke von ungefähr 3 mm verkleidet.

3. Sperre der Öffnungen für den Durchgang von Röhrchen und/oder Rohrleitungen und/oder Kabel nach Anspruch 1, **dadurch gekennzeichnet, daß** die Verankerungsklammern (11) die Breite der Flügel (17) des "T" besitzen, wodurch die Konstanz der Dicke der vollendeten Sperre gewährleistet wird.

4. Sperre der Öffnungen für den Durchgang von Röhrchen und/oder Rohrleitungen und/oder Kabel nach Anspruch 1, **dadurch gekennzeichnet, daß** die Verankerungsklammern (11) aus Lochblech zum Beispiel aus Zinkstahl erhalten werden.

5. Sperre der Öffnungen für den Durchgang von Röhrchen und/oder Rohrleitungen und/oder Kabel nach-Anspruch 1; **dadurch gekennzeichnet, daß** die Verankerungsklammern (11) eine Dicke von 0,9 mm, eine Höhe von 20 mm und eine Breite der beiden Flügel (17) des "T" von 60 mm, eine Länge von 80 mm oder mehrfach besitzen.

6. Sperre der Öffnungen für den Durchgang von Röhrchen und/oder Rohrleitungen und/oder Kabel nach Anspruch 1, **dadurch gekennzeichnet, daß** ein versiegelndes (13), nicht brennbares und elastisches Material verwendet wird, ein Produkt, das mit dem Handelsnamen "NAVYCROSS" oder ähnlichem bekannt ist.

7. Sperre der Öffnungen für den Durchgang von Röhrchen und/oder Rohrleitungen und/oder Kabel nach Anspruch 1, **dadurch gekennzeichnet, daß** die ausfüllenden Modulelemente (12) aus Streifen von selbstlöschendem Schaumschwamm aus Polyurethan, aus Gesteinswolle oder ähnlichem mit vorbestimmter Breite bestehen.

8. Sperre der Öffnungen für den Durchgang von Röhrchen und/oder Rohrleitungen und/oder Kabel nach Anspruch 1, **dadurch gekennzeichnet, daß** die ausfüllenden Modulelemente (12) aus einem Material bestehen, das unter dem Handelsnamen " Füllmodule FR" bekannt ist.

9. Sperre der Öffnungen für den Durchgang von Röhrchen und/oder Rohrleitungen und/oder Kabel nach Anspruch 1, **dadurch gekennzeichnet, daß** das versiegelnde (13), nicht brennbare und elastische Material aus einem Produkt mit einem einzigen Bestandteil aus Fasern besteht.

10. Sperre der Öffnungen für den Durchgang von Röhrchen und/oder Rohrleitungen und/oder Kabel nach Anspruch 1, **dadurch gekennzeichnet, daß** die ausfüllenden Modulelemente (12) die folgenden Maße besitzen: Dicke 30 mm, Breite 40 mm, Länge ein Meter; die Schichtdicke des versiegelnden (13), nicht brennbaren und elastischen Materials beträgt 10 mm auf beiden Seiten, deswegen beträgt die Gesamtdicke der Sperre 60 mm, die der Breite der Flügel (17) der Verankerungsklammern (11) entspricht.

11. Verfahren zur Verwirklichung der Sperre der Öffnungen für den Durchgang von Röhrchen und/oder Rohrleitungen durch Schiffstrennwände bis zur Klasse A 60, die unter-hydrostatischem Druck stehen, nach Anspruch 1, **dadurch gekennzeichnet, daß** die Verankerungsklammern (11), die aus einem Lochblechstreifen, der in "T" Form gebogen wurde, erhalten wurden, auf dem Randumfang der Öffnung (15) angeordnet sind, die Stange des "T" befindet sich rittlings auf dem Rand der Öffnung (15), die Flügel des "T" entfernen sich in einer meist senkrechten Richtung zu jeder der beiden Seiten der durchquerten Trennwand, daß die Abdichtung der Röhrchen und/oder Rohrleitungen (19) so erfolgt, daß die freie Oberfläche der Durchgänge durch Pressen ausgefüllt wird, indem von dem peripheren Gebiet dieser Durchgänge ausgeht, dies geschieht durch ausfüllende Modulelemente (12), die aus flexiblen Streifen aus isolierendem, die Ausbreitung der Flammen begrenzendem oder selbstlöschendem Material bestehen, und daß der Vorgang durch Ausfüllen und Pressen der zentralen Gebiete, die zwischen den Röhrchen und/oder Rohrleitungen (19) frei geblieben sind, durch die ausfüllenden Modulelemente (12) vollendet wird; nachdem die Öffnung (15) völlig ausgefüllt wurde, erfolgt die Verkleidung der Abdichtung durch ein versiegelndes (13), nicht brennbares und elastisches Material, das mit Hilfe eines Spatels oder durch Fließpressen aufgetragen wird, indem man die Applikation um die zentralen Röhrchen und/oder Rohrleitungen (19) beginnt und dann progressiv in Richtung der peripheren Gebiete vorgeht, und auch die Verankerungsklammern (11) verkleidet bis man an die Trennwand gelangt; dies geschieht mit Hilfe des versiegelnden (13), nicht brennbaren und elastischen Materials, mit dem versiegelnden (31), nicht brennbaren und elastischen Material werden die Röhrchen und/oder Rohrleitungen (19) großen Ausmaßes verkleidet, die zum Beispiel einen Durchmesser gleich oder mehr als 42 mm auf einer Länge von ungefähr 100 mm und einer Dicke von ungefähr 3 mm besitzen, und zwar auf einer oder auf beiden Seiten der Sperre.

12. Verfahren zur Verwirklichung der Sperre der Öffnungen für den Durchgang von Kabel (20) durch Schiffstrennwände bis zur Klasse A 60, die unter hydrostatischem Druck stehen, nach Anspruch 1, **dadurch gekennzeichnet, daß** die Verankerungsklammern (11), die aus einem Lochblechstreifen, der in "T" Form gebogen wurde, erhalten wurden, auf dem Randumfang der Öffnung (15) angeordnet sind, die Stange des "T" befindet sich rittlings auf dem Rand der Öffnung (15), die Flügel des "T" entfernen sich in einer meist senkrechten Richtung zu jeder der beiden Seiten der durchquerten Trennwand, daß die Abdichtung so erfolgt, daß die Kabel (20) durch ausfüllende Modulelemente (12), die aus flexiblen Streifen aus isolierendem, die Ausbreitung der Flammen begrenzendem oder selbstlöschendem Material bestehen, umgeben werden und daß man bei den Kabel beginnt, die im Zentrum der Öffnung (15) liegen, bis die peripher gelegenen erreicht werden. Der Vorgang wird beendet, indem man durch Ausfüllen und Pressen der peripheren Gebiete, die zwischen den Kabel (20 ) und den Rändern der Öffnung (15) frei geblieben sind, durch die ausfüllenden Modulelemente (12) vollendet ; nachdem die Öffnung (15) völlig ausgefüllt wurde, erfolgt die Verkleidung der Abdichtung durch ein versiegelndes (13), nicht brennbares und elastisches Material, das mit Hilfe eines Spatels oder durch Fließpressen aufgetragen wird, indem man die Applikation um die zentralen Kabel (20) beginnt und dann progressiv in Richtung der peripheren Gebiete vorgeht, und auch die Verankerungsklammern (11) verkleidet bis man an die Trennwand gelangt; dies geschieht mit Hilfe des versiegelnden (13), nicht brennbaren und elastischen Materials, mit dem versiegelnden (31), nicht brennbaren und elastischen Material werden die Kabel (20) großen Ausmaßes verkleidet, die zum Beispiel einen Durchmesser gleich oder mehr als 42 mm auf einer Länge von ungefähr 100 mm und einer Dicke von ungefähr 3 mm besitzen, und zwar auf einer oder auf beiden Seiten der Sperre.

## Claims

1. Closing of the openings for pipes and/or conduits and or electric wires across ship bulkheads up to A 60 Class and under water head, **characterized by** the fact that it is obtained by inserting anchoring staples (11) mounted across the opening edge (15), and consisting of a T-shaped strip which is elastically bent along the Tee-piece stem (16) , being said Tee piece stem mounted across the opening (15) edge, and the Tee-piece wings being set apart generally in a perpendicular fashion to each of the sides of the crossed bulkhead, and by the fact that the surfaces that are still left open are closed with filling modules (12), consisting of flexible strips of insulating low flame propagation or self-extinguishing material, and by the fact that the filling is then coated with fireproof and elastic sealing material (13,31) which is applied with a knife blade or by extrusion.

2. Closing of the openings for pipes and/or conduits and or electric wires according to claim 1, **characterized by** the fact that the fireproof and elastic sealing material (31), starting from either or both sides of the closing, covers all large sized pipes and/or conduits (19) and or electric wires (20), for example those having a diameter equal or greater than 42 mm, across a length of approximately 100 mm and with a thickness of approximately 3 mm.

3. Closing of the openings for pipes and/or conduits and or electric wires according to claim 1, **characterized by** the fact that the anchoring staples (11) feature Tee-piece wings (17) having sufficient width to ensure that the thickness of the finished closing remains consistent throughout.

4. Closing of the openings for pipes and/or conduits and or electric wires according to claim 1, **characterized by** the fact that that the anchoring staples (11) are obtained from a bored metal - for example galvanized iron - strip.

5. Closing of the openings for pipes and/or conduits and or electric wires according to claim 1, **characterized by** the fact that the anchoring staples (11) are 0.9 mm thick, 20 mm high, and that the Tee-piece wings (17) are 60 mm wide, and 80 mm (or a multiple number) long.

6. Closing of the openings for pipes and/or conduits and or electric wires according to claim 1, **characterized by** the fact that the material employed for sealing (13) is a fireproof and elastic product known under the brand name of "NAVYCROSS" or any other similar product.

7. Closing of the openings for pipes and/or conduits and or electric wires according to claim 1, **characterized by** the fact that the filling modules (12) consist of strips of self-extinguishing polyurethane foam, rock wool, or similar other materials, having a predetermined width.

8. Closing of the openings for pipes and/or conduits and or electric wires according to claim 1, **characterized by** the fact that the filling modules (12) consist of a material known under the brand name "FR Filling Modules".

9. Closing of the openings for pipes and/or conduits and or electric wires according to claim 1, **characterized by** the fact that fireproof and elastic sealing material (13) consists of a fiber-based mono-component product.

10. Closing of the openings for pipes and/or conduits and or electric wires according to claim 1, **characterized by** the fact that the filling modules (12) have been designed to be 30 mm thick, 40 mm wide, one meter long, and that the fireproof and elastic sealing material layer (13) is 10 mm thick on both sides, hence the overall thickness of the closing will be 60 mm, which corresponds to the width of the wings (17) of the anchoring staples (11).

11. Procedure to close the openings for pipes and/or conduits across ship bulkheads up to A 60 Class and under water head according to claim 1, **characterized by** the fact that the anchoring staples (11) obtained from a bored and bent T-shaped metal strip are inserted into the opening (15) perimeter, being the Tee piece stem mounted across the opening (15) edge, and the Tee-piece wings being set apart generally in a perpendicular fashion to each of the sides of the crossed bulkhead, and that the pipes and/or conduits openings (19) are filled by pressing filling modules (12) into the still open spaces, starting from their perimeter; these filling modules consist of flexible strips of insulating low flame propagation or self-extinguishing material, and that the operation is completed by filling and pressing filling modules (12) into the central spaces that are still open between the pipes and/or conduits (19), and that after having fully closed the opening (15) , the same is coated with a fireproof and elastic sealing material (13) applied with a knife blade or by extrusion, starting from around the central pipes and/or conduits (19) and applying it progressively towards the peripheral areas, also by coating the anchoring staples (11) up onto the bulkhead, with the fireproof and elastic sealing material (13); are also coated with fireproof and elastic sealing material (31) large size pipes and/or conduits (19) for example those having a diameter equal or greater than 42 mm, across a length of approximately 100 mm, and with a thickness of approximately 3 mm, on either or both sides of the closing.

12. Procedure to close the openings for electric wires (20) across ship bulkheads up to A 60 Class and under water head according to claim 1, **characterized by** the fact that the anchoring staples (11) obtained from a bored and bent T-shaped metal strip are inserted into the opening (15) perimeter, being the Tee piece stem mounted across the opening (15) edge, and the Tee-piece wings being set apart generally in a perpendicular fashion to each of the sides of the crossed bulkhead, and that the opening is filled by coating the wires (20) with filling modules (12) which consist of flexible strips of insulating low flame propagation or self-extinguishing material, starting from the wires at the center of the opening (15) up to those in a more peripheral position, and that the operation is completed by filling and pressing filling modules (12) into the perimetral spaces that are still open between the wires (20) and the opening (15) edge, and that after having fully closed the opening (15), the same is coated with a fireproof and elastic sealing material (13) which is applied with a knife blade or by extrusion, starking from around the central electric wires (20) and then progressively towards the peripheral areas, also by coating the anchoring staples (11) up to the bulkhead; with the fireproof and elastic sealing material (31) large size electric wires (20), for example those having a diameter equal or greater than 42 mm, across a length of approximately 100 mm, and with a thickness of approximately 3 mm are also coated, on either or both sides of the closing.
